(19) Europäisches Patentamt
European Patent Office
Office européen des brevets

(11) Veröffentlichungsnummer: **0 002 744**
**B1**

(12) **EUROPÄISCHE PATENTSCHRIFT**

(45) Veröffentlichungstag der Patentschrift: **12.05.82**

(51) Int. Cl.³: **C 08 L 83/04,** C 08 G 77/42, C 08 F 283/12

(21) Anmeldenummer: **78101704.1**

(22) Anmeldetag: **15.12.78**

(54) **Härtbare Massen auf Grundlage von modifizierten Polyorganosiloxangemischen mit in situ gebildeten Teilchen und Verfahren zur Herstellung der modifizierten Polyorganosiloxangemische.**

(30) Priorität: **16.12.77 US 861312**

(43) Veröffentlichungstag der Anmeldung: **11.07.79 Patentblatt 79/14**

(45) Bekanntmachung des Hinweises auf die Patenterteilung: **12.05.82 Patentblatt 82/19**

(84) Benannte Vertragsstaaten: **BE DE FR GB NL**

(56) Entgegenhaltungen:
**FR-A-2 343 010**
**US-A-3 555 109**
**US-A-3 631 087**

(73) Patentinhaber: **SWS Silicones Corporation, Adrian/Michigan 49221 (US)**

(72) Erfinder: **Getson, John C., 4394 Hampton Court, Adrian/Michigan 49221 (US)**

(74) Vertreter: **Wagner, Helga, Dr., c/o Wacker-Chemie GmbH Prinzregentenstrasse 22, D-8000 München 22 (DE)**

EP 0 002 744 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Härtbare Massen auf Grundlage von modifizierten Polyorganosiloxangemischen mit in situ gebildeten Teilchen und Verfahren zur Herstellung der modifizierten Polyorganosiloxangemische

Gegenstand der Erfindung sind härtbare Massen auf Grundlage von Si–H-Bindungen aufweisenden Polyorganosiloxanen, worunter modifizierte Polyorganosiloxane, insbesondere Polyorganosiloxangemische, die in situ gebildete Teilchen enthalten, zu verstehen sind, einer Vinylgruppen enthaltenden Verbindung als Vernetzer und einem die Addition von Si–H-Bindungen an Vinylgruppen unterstützenden Katalysator. Diese Massen können zu Produkten mit verbesserten physikalischen Eigenschaften gehärtet werden. Gegenstand der Erfindung ist ferner ein Verfahren zur Herstellung der modifizierten Polyorganosiloxangemische.

Für die Herstellung von modifizierten Polyorganosiloxanen sind bereits mehrere Verfahren bekanntgeworden. So wird beispielsweise in den US-A-3 555 109 und 3 776 875 die Umsetzung von Monomeren, die aliphatisch ungesättigte Bindungen enthalten, mit Polyorganosiloxanen, die endständige Hydroxylgruppen oder hydrolysierbare Gruppen aufweisen, in Gegenwart von freien Radikalen beschrieben. Gemäß dem in der US-A-3 631 087 beschriebenen Verfahren erfolgt die Herstellung von modifizierten Polyorganosiloxanen durch allmähliches Eintragen eines Gemisches aus Monomeren und Radikalbildnern in vorerhitzte Polyorganosiloxane, während gemäß dem in der US-A-3 694 478 beschriebenen Verfahren einem vorerhitzten Gemisch aus Polyorganosiloxanen und einem organischen Monomeren, das aliphatisch ungesättigte Bindungen enthält, die Radikalbildner allmählich zugegeben werden. Gemäß dem in der US-A-4 032 499 beschriebenen Verfahren werden aliphatisch ungesättigte Monomere mit hydrolysierbare Gruppen oder Hydroxylgruppen aufweisenden Polyorganosiloxanen in Gegenwart von Radikalbildnern und einer inerten Flüssigkeit mit einem Siedepunkt von bis zu etwa 100°C/101,32 KPa (abs.), in der weder die zu pfropfenden Polyorganosiloxane, noch die bei der Pfropfreaktion erhaltenen Polymerisate bei der jeweils angewendeten Polymerisationstemperatur löslich sind, umgesetzt, und in der US-A-4 014 851 werden mit Polyolefin gefüllte Polyvinylorganosiloxangemische beschrieben, die durch Polymerisation von aliphatisch ungesättigten Monomeren in Gegenwart von Polyvinylorganosiloxanen und Radikalbildnern hergestellt werden.

Nach dem Verfahren gemäß der FR-A-2 343 010 werden modifizierte Polymerisate durch Polymerisation von ungesättigten Estern mittels Radikalbildnern in Gegenwart von endblockierten Alkyl-H-polysiloxanen hergestellt, die für die Behandlung von Textilmaterial Verwendung finden, wobei die besten Ergebnisse mit freie Hydroxylgruppen enthaltenden, modifizierten Polymerisaten erzielt werden. Durch Anlagerung von Si-gebundenen H-Atomen an Vinylgruppen vernetzbare Massen werden hierdurch nicht nahegelegt.

Polyorganosiloxanelastomere haben aufgrund ihrer thermischen Stabilität, ihrer dielektrischen Eigenschaften und ihrer Alterungsbeständigkeit weite Anwendung gefunden. Es wurde jedoch festgestellt, daß einige Eigenschaften dieser Polyorganosiloxanelastomeren bei bestimmten Anwendungsgebieten nicht befriedigen. So konnten beispielsweise die physikalischen Eigenschaften durch Zugabe von verstärkenden Füllstoffen oder Füllmitteln, wie Polytetrafluoräthylenfasern, nicht in dem gewünschten Ausmaß verbessert werden. Wenn derartige Fasern in statischer Verteilung in einem Polyorganosiloxan dispergiert werden, ist es schwierig, ein homogenes Gemisch zu erhalten. Außerdem zeigte sich, daß die nach den bisher bekannten Verfahren hergestellten, modifizierten Polyorganosiloxane während des Härtungsvorgangs zum Schrumpfen neigen, was insbesondere dann von Nachteil ist, wenn die Produkte als Form- oder Vergußmassen Verwendung finden.

Der Erfindung liegt daher die Aufgabe zugrunde, härtbare Massen zur Verfügung zu stellen, die modifizierte Polyorganosiloxangemische mit in situ gebildeten Teilchen enthalten, die durch Umsetzung von aliphatisch ungesättigten Monomeren mit Polyorganosiloxanen in Gegenwart von Radikalbildnern bei erhöhter Temperatur hergestellt worden sind. Die diese Gemische enthaltenden härtbaren Massen können zusammen mit Vernetzungsmitteln, Härtungskatalysatoren und gegebenenfalls anderen üblichen Zusätzen sowohl bei Raumtemperatur als auch in der Hitze unter Bildung von Elastomeren mit verbesserten physikalischen Eigenschaften gehärtet werden.

Die Aufgabe wird erfindungsgemäß durch härtbare Massen auf Grundlage von Si–H-Bindungen aufweisenden Polyorganosiloxanen, einer Verbindung mit mindestens zwei Vinylgruppen je Molekül als Vernetzer und einem Katalysator, der die Addition von Si-gebundenen Wasserstoffatomen an die Vinylgruppen unterstützt, gelöst, die als Si–H-Bindungen aufweisende Polyorganosiloxane modifizierte Polyorganosiloxangemische mit in situ gebildeten Teilchen aus

(1) 20 bis 95 Gew.-% flüssigen Polyorgano-H-siloxanen und
(2) 80 bis 5 Gew.-%, jeweils bezogen auf das Gesamtgewicht von (1) und (2), organischen Polymeren mit sich wiederholenden, von aliphatisch ungesättigte Bindungen aufweisenden Monomeren ableitenden Einheiten,

die durch Polymerisation von aliphatisch ungesättigte Bindungen aufweisenden Monomeren in Gegenwart von flüssigen Polyorgano-H-siloxanen mit einer Viskosität von 10 bis 1 000 000 mPas/25°C

mittels freier Radikale hergestellt worden sind, enthalten.

Unter den modifizierten Polyorganosiloxangemischen in den härtbaren Massen sind die gesamten Reaktionsprodukte zu verstehen, die bei der Polymerisation der aliphatisch ungesättigten Monomeren in Gegenwart der Polyorgano-H-siloxane mittels freier Radikale erhalten worden sind, wobei die gesamten organischen Polymeren oder ein Teil derselben durch C—C-Bindung mit den Polyorganosiloxanen verknüpft sind, neben organischen Homo- oder Copolymeren und Polyorgano-H-siloxanen.

Unter den flüssigen Polyorgano-H-siloxanen, in deren Gegenwart die Polymerisation der aliphatisch ungesättigten Monomeren durchgeführt worden ist, sind beispielsweise solche zu verstehen, die je Molekül mindestens 2 SiH-Gruppen aufweisen und die aus Einheiten der durchschnittlichen Formel

$$(R)_aSi(H)_bSiO_{\frac{4-a-b}{2}} \qquad (I)$$

aufgebaut sind, worin R gleiche oder verschiedene, von aliphatisch ungesättigten Bindungen freie, einwertige, gegebenenfalls halogenierte Kohlenwasserstoff- oder Cyanoalkylreste bedeutet, a einen Wert von 0 bis 2,5, vorzugsweise 0,5 bis 2,1, b einen Wert von 0,0005 bis 2,0 hat und die Summe von a + b 1,0 bis 3 ist.

Beispiele für einwertige Kohlenwasserstoffreste R sind Alkylreste mit 1 bis 18 C-Atomen, wie Methyl-, Äthyl-, Propyl-, Butyl-, Hexyl-, Octyl-, Decyl- und Octadecylreste; Cycloalkylreste, wie Cyclopentyl- und Cyclohexylreste; Arylreste, wie Phenyl- und Naphthylreste; Alkarylreste, wie der Benzylrest; alpha- und beta-Phenyläthylreste, alpha- und beta-Phenylpropylreste; halogenierte Derivate der genannten Reste, wie Chlormethyl-, Trifluormethyl-, Chlorpropyl-, Chlorphenyl-, Dibromphenyl-, Tetrachlorphenyl- und Difluorphenylreste, ferner Cyanoalkylreste, wie beta-Cyanoäthyl-, gamma-Cyanopropyl- und beta-Cyanopropylreste. Als Reste R bevorzugt sind Alkylreste mit 1 bis 3 C-Atomen und insbesondere Methylreste.

Die Polyorgano-H-siloxane haben eine Viskosität im Bereich von 10 bis 10 000 000 mPas/25° C, vorzugsweise von 10 bis 5 000 000 mPas/25° C und insbesondere von 50 bis 1 000 000 mPas/25° C. Die SiH-Gruppen können entweder endständig und/oder entlang der Kette angeordnet sein. Vorzugsweise enthalten die Polyorgano-H-siloxane mindestens 2 Si-gebundene H-Atome je Molekül, insbesondere, wenn das resultierende modifizierte Polyorganosiloxangemisch zu Elastomeren gehärtet werden soll.

Die Polyorgano-H-siloxane können jedoch auch Copolymere sein, die je Molekül mindestens 1 Einheit der Formel

$$(R)_c(H)_dSiO_{\frac{4-c-d}{2}} \qquad (II)$$

aufweisen, worin R die angegebene Bedeutung hat und c = 0, 1 oder 2, d = 1 oder 2 und die Summe von c + d = 1, 2 oder 3, während die restlichen Siloxaneinheiten solche der Formel

$$(R)_nSiO_{\frac{4-n}{2}} \qquad (III)$$

sind, worin R die angegebene Bedeutung hat und n = 0, 1, 2 oder 3. Derartige Copolymeren enthalten im allgemeinen 0,1 bis 99,5 Mol-% Einheiten II und 0,5 bis 99,9 Mol-% Einheiten III.

Beispiele für Siloxaneinheiten II sind H-Siloxaneinheiten ($HSiO_{1,5}$), Methyl-H-siloxaneinheiten ($HSiCH_3O$), Dimethyl-H-siloxaneinheiten und Di-H-siloxaneinheiten ($H_2SiO$).

Als Polyorgano-H-siloxane aus Einheiten der durchschnittlichen Formel I sind endständige SiH-Gruppen aufweisende Diorganopolysiloxane bevorzugt, beispielsweise solche der allgemeinen Formel

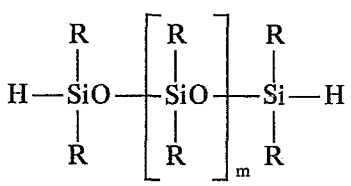

worin R die angegebene Bedeutung zukommt und m einen Wert hat, der einer Viskosität von 10 bis 1 000 000 mPas/25° C entspricht. Vorzugsweise sind hierin alle Reste R Methylreste. Beispiele für derartige Polyorgano-H-siloxane sind in den US-PS 2 823 218, 3 159 662 und 3 220 972 beschrieben.

Beispiele für Polyorgano-H-siloxane aus Einheiten der durchschnittlichen Formel I sind 1,3-Dimethyldisiloxan, 1,1,3,3-Tetramethyldisiloxan sowie höhere Polymere mit bis zu 100 000 Si-Atomen je Molekül.

Für die Polymerisation in Gegenwart der Polyorgano-H-siloxane können beliebige polymerisierbare organische Monomere, die aliphatisch ungesättigte Bindungen enthalten, verwendet werden. Beispiele für derartige Monomere sind geradkettige Kohlenwasserstoffe mit niedrigem Molekulargewicht, wie Äthylen, Propylen, Butylen; Vinylhalogenide, wie Vinylchlorid und Vinylfluorid; Vinylester von organischen Säuren, wie Vinylacetat; Styrol, Ring-substituierte Styrole und andere Vinyl-Aromaten, wie Vinylpyridin und Vinylnaphthalin; Acrylsäure und deren Derivate, wie der Salze, Ester, Amide und Acrylnitril; N-Vinylverbindungen, wie Vinylcarbazol, N-Vinylpyrrolidon und N-Vinylcaprolactam; Vinylgruppen enthaltende Silane, wie Vinyltriäthoxysilan.

Auch disubstituierte Äthylene entsprechend der allgemeinen Formel $CH_2=CX_2$ können verwendet werden, wie Vinylidenfluorid, Vinylidenchlorid, Vinylidencyanid, Methacrylsäure und deren Derivate, wie der Salze, Ester und Amide, sowie Methacrolein und Methacrylnitrile, ferner disubstituierte Äthylene entsprechend der allgemeinen Formel $CHX=CHX$, wie Vinylencarbonat und verschiedene Monomere, die am besten in Gegenwart anderer Monomerer polymerisieren, wie Maleinsäureanhydrid, Ester der Malein- und Fumarsäure, Stilben, Inden und Cumaron.

Außerdem können Monomere mit mehr, das heißt, mindestens 2 aliphatisch ungesättigten Bindungen verwendet werden, z. B. Ester, wie Allylmethacrylat, Allylacrylat, Diallyladipat, Methallylacrylat, Methallylmethacrylat, Vinylacrylat, Vinylmethacrylat; Kohlenwasserstoffe, wie Divinylbenzol und Vinylcyclohexen; Ester aus Polyolen und Acryl- bzw. Methacrylsäure, wie Äthylendimethacrylat, Tetramethylendiacrylat und Pentaerythrittetramethacrylat, sowie konjugierte Diolefine, wie 1,3-Butadien, Isopren und Chloropren.

Diese Monomeren können einzeln oder im Gemisch von 2, 3 oder mehr eingesetzt werden. Die Eigenschaften des Reaktionsproduktes sind dabei selbstverständlich sowohl von der Art der verwendeten Monomeren als auch der Menge derselben, die in bezug auf die Polyorgano-H-siloxane eingesetzt wurden, abhängig. Monomere, die elastomere Homopolymere liefern, verleihen im allgemeinen auch dem Reaktionsprodukt elastomere Eigenschaften, während solche, die plastische Homopolymere liefern, dazu neigen, Reaktionsprodukte mit weniger elastischen Eigenschaften zu bilden.

Die Polymerisation der organischen Monomeren in Gegenwart der Polyorgano-H-siloxane wird zweckmäßig unter Verwendung eines Radikalbildners durchgeführt, worunter vorzugsweise organische Peroxide zu verstehen sind. Es können jedoch auch andere Radikalbildner, wie Azoverbindungen, in welchen die beiden N-Atome der Azobindung an ein tertiäres C-Atom gebunden sind und die restlichen Valenzen des tertiären C-Atoms durch Nitril-, Carboxyalkyl-, Cycloalkylen- oder Alkylreste, vorzugsweise mit 1 bis 18 C-Atomen, abgesättigt sind, verwendet werden. Ferner können die freien Radikale auch durch eine energiereiche Strahlung erzeugt werden.

Als organische Peroxide sind solche der allgemeinen Formeln ROOH und ROOR, worin R einen organischen Rest bedeutet, bevorzugt. Beispiele hierfür sind Hydroperoxide, wie tert.-Butylhydroperoxid, Cumolhydroperoxid und Decalinhydroperoxid; Dialkylperoxide, wie Di-tert.-butyl- und Dicumylperoxid; cyclische Peroxide, wie Ascaridol und 1,5-Dimethylhexan-1,5-peroxid; Perester, wie tert.-Butylperbenzoat, tert.-Butylperoxyisopropylcarbonat und tert.-Butylperoctoat; Ketoperoxide, wie Acetonperoxid und Cyclohexanonperoxid.

Acylperoxide und Persäuren können ebenfalls verwendet werden, obwohl sie im allgemeinen zu einer geringeren Pfropfung führen, das heißt, zu schlechteren Ausbeuten an den gepfropften Produkten. Es wird angenommen, daß für diese unterschiedliche Wirkungsweise die Art der gebildeten Radikale verantwortlich ist. So haben tertiäre Alkoxyradikale aus dem Di-tert.-Butylperoxid die Neigung, den Si-gebundenen organischen Gruppen H-Atome zu entziehen, worauf möglicherweise der Mechanismus der Pfropfreaktion beruht. Acyloxyradikale hingegen, die aus einem Acylperoxid, beispielsweise Benzoylperoxid, stammen, sind zwar wirksame Polymerisationskatalysatoren, aber ziemlich unwirksam für die Entziehung von H-Atomen aus den Si-gebundenen organischen Gruppen.

Die Menge des verwendeten Radikalbildners ist nicht entscheidend. Bei Einsatz der aktiveren Peroxide sind meist so geringe Mengen, wie 0,05%, bezogen auf das Gewicht der zu polymerisierenden Monomeren, ausreichend. Zur Erhöhung der Reaktionsgeschwindigkeit können jedoch auch größere Mengen, wie 3 Gew.-% oder mehr, der Radikalbildner eingesetzt werden. Im allgemeinen sollten jedoch Mengen von etwa 5 Gew.-% nicht überschritten werden, da sonst eine zu starke Vernetzung begünstigt wird, was mit einem unerwünschten Anstieg der Viskosität des Reaktionsgemisches verbunden ist.

Die obengenannten Radikalbildner können für jedes beliebige Monomere verwendet werden. Wenn beispielsweise die Halbwertszeit des Radikalbildners in Toluol mehr als 2 Stunden bei der jeweils angewendeten Polymerisationstemperatur beträgt, ist es vorteilhaft, einen Teil oder die gesamte Menge der Radikalbildner vor Beginn der Polymerisation mit den Polyorgano-H-siloxanen und den aliphatisch ungesättigten Monomeren zu vermischen. Wenn hingegen die Halbwertszeit des Radikalbildners unter den angegebenen Bedingungen weniger als 2 Stunden beträgt, ist es vorteilhaft, den Radikalbildner portionsweise oder kontinuierlich während der Polymerisation bei der jeweils angewendeten Temperatur zuzufügen.

Die Polymerisation der organischen Monomeren in Gegenwart der Polyorgano-H-siloxane kann in Abwesenheit oder in Gegenwart eines flüssigen Mediums durchgeführt werden, das sich sowohl

gegenüber den Reaktionsteilnehmern als auch den Polymerisationsprodukten und den in situ gebildeten Teilchen inert verhält. Als flüssige Medien werden vorteilhaft solche verwendet, die einen Siedepunkt unter etwa 130° C/101,32 kPa (abs.) haben und worin sich die gebildeten Polymerisationsprodukte bei der Polymerisationstemperatur nicht lösen. Beispiele für derartige inerte flüssige Medien sind Wasser, Methanol und gesättigte aliphatische Kohlenwasserstoffe, aliphatische Fluor- und Chlorkohlenwasserstoffe, in welchen 3 Halogenatome an mindestens einem C-Atom gebunden sind. Wasser ist als inerte Flüssigkeit bevorzugt, da es leicht verfügbar ist und die Monomeren, die Polyorgano-H-siloxane und die Polymeren darin unlöslich sind. Es ist jedoch auch möglich, Gemische aus mehreren Flüssigkeiten zu verwenden, sofern sie den genannten Bedingungen (Siedepunkt unter 130° C, inertes Verhalten gegenüber Ausgangs- und Endprodukten) genügen.

Obwohl die Temperatur für die Polymerisation keine entscheidende Rolle spielt, sollten Temperaturen oberhalb von etwa 160° C vermieden werden, denn es wurde festgestellt, daß hierbei manchmal die Bildung der Teilchen verhindert wird, was zu Polymeren mit schlechteren Eigenschaften führt. Aus diesem Grunde ist es vorteilhaft, die Polymerisation bei Temperaturen unterhalb von etwa 150° C und insbesondere bei Temperaturen von etwa 50° bis etwa 140° C durchzuführen.

Außerdem ist es vorteilhaft, die Polymerisation in praktisch sauerstofffreier Umgebung durchzuführen, da es sich um eine Radikalbildungsreaktion handelt. Das kann durch Spülen des Reaktionsgefäßes mit einem inerten Gas, wie Stickstoff, erreicht werden.

Die Polymerisation kann unter Normaldruck, unter vermindertem oder erhöhtem Druck durchgeführt werden. Vorzugsweise wird unter Normaldruck gearbeitet. In Abhängigkeit von den jeweils gewählten Reaktionsbedingungen ist die Polymerisationsreaktion in etwa 30 Minuten bis zu etwa 10 Stunden beendet.

Das Mengenverhältnis von organischen Monomeren zu Polyorgano-H-siloxanen kann in weitem Bereich variiert werden. Die Mengen an Polyorgano-H-siloxanen können im Bereich von etwa 20 bis 95 Gew.-%, bezogen auf das Gesamtgewicht, das sind organische Monomere + Polyorgano-H-siloxane, liegen. Es können jedoch auch weniger als 20 Gew.-% Polyorgano-H-siloxane, bezogen auf das Gesamtgewicht, eingesetzt werden. Vorzugsweise werden die Polyorgano-H-siloxane in Mengen von etwa 25 bis 70 Gew.-%, bezogen auf das Gesamtgewicht der Reaktionsteilnehmer, eingesetzt.

Außerdem wurde festgestellt, daß die Anwendung von Scherkraft einen beträchtlichen Einfluß auf die Bildung der Teilchen, insbesondere auf die Bildung von länglichen, stäbchenförmigen Teilchen ausüben kann. Es wird angenommen, daß durch Steuerung des Ausmaßes der Scherwirkung auf die Reaktionsteilnehmer Teilchen mit verschiedener Konfiguration gebildet werden. So können beispielsweise längliche, stäbchenförmige Teilchen mit einer Länge von 10 bis 500 µm und einem Durchmesser von 1 bis 5 µm durch sorgfältige Kontrolle der Scherwirkung in situ gebildet werden. Durch die Anwesenheit dieser stäbchenförmigen Teilchen werden die physikalischen Eigenschaften des resultierenden Polyorganosiloxangemisches und insbesondere des gehärteten Produktes entscheidend verbessert. Aus diesem Grunde ist es daher vorteilhaft, die Polymerisation unter Bedingungen durchzuführen, die zur Bildung von länglichen, stäbchenförmigen Teilchen in situ führen. Werden beispielsweise Polyorganosiloxangemische, die diese stäbchenförmigen Teilchen enthalten, unter Bildung von Elastomeren gehärtet, zeigen diese Elastomeren beträchtlich verbesserte Werte für Zugfestigkeit, Dehnung und Einreißfestigkeit.

Da die Scherwirkung diesen erheblichen Einfluß auf die Größe und Form der in situ gebildeten Teilchen haben kann, ist es vorteilhaft, die Polymerisation bei einem Schergeschwindigkeitsgradienten, der als Maß für die Scherwirkung dient, im Bereich von etwa 5 bis 1000 $sec^{-1}$, vorzugsweise 15 bis 300 $sec^{-1}$, durchzuführen. Dieser Schergeschwindigkeitsgradient errechnet sich aus der linearen Geschwindigkeit des Rührflügels, dividiert durch dessen Entfernung von der Reaktorwand am Punkt der engsten Annäherung.

Nach Beendigung der Polymerisation können nichtumgesetzte Monomere vom gewünschten Produkt in beliebiger herkömmlicher Weise, z. B. durch Destillation, Lösungsmittelextraktion oder selektive Lösungsmittelfraktionierung abgetrennt werden.

Die so hergestellten modifizierten Polyorganosiloxangemische können für die Herstellung von elastomeren Formteilen, Abdichtungen, Einbettungen oder Überzügen verwendet werden. Besonders nützlich ist ihre Verwendung in Massen, die bei der Formgebung möglichst wenig schrumpfen dürfen.

Die erfindungsgemäßen modifizierten Organopolysiloxangemische können als Grundlage für bei Raumtemperatur oder in der Hitze zu Elastomeren härtbaren Massen eingesetzt werden. Derartige Massen enthalten neben den modifizierten Organopolysiloxangemischen, die nach dem oben beschriebenen Verfahren hergestellt worden sind, eine Verbindung mit mindestens 2 Vinylgruppen je Molekül als Vernetzer und einen Katalysator, der die Addition der SiH-Gruppen in den Polyorgano-H-siloxanen an die Vinylgruppen unterstützt.

Als für Vernetzer geeignete, Vinylgruppen enthaltende Verbindungen sind Vinylgruppen enthaltende Polyorganosiloxane bevorzugt. Derartige Verbindungen sind bekannt und aus Einheiten der durchschnittlichen Formel

$$(R)_a(R')_bSiO_{\frac{4-a-b}{2}} \qquad (IV)$$

aufgebaut, worin R die oben angegebene Bedeutung hat und R' eine Vinylgruppe der Formel $CH_2=CH-$ ist, die mit dem Si-Atom über eine SiC-Bindung verknüpft ist, a einen Wert von 0 bis 2,5, vorzugsweise 0,5 bis 2,1, b einen Wert von 0,0005 bis 2,0 hat und die Summe von a+b 1,0 bis 3 ist. Derartige Polyvinylorganosiloxane sind beispielsweise in den US-PS 3 159 662 und 3 220 972 beschrieben.

In der angegebenen Formel IV können die Reste R gleich oder verschieden sein und einwertige, gegebenenfalls halogenierte Kohlenwasserstoffreste mit 1 bis 18 C-Atomen oder Cyanoalkylreste sein. Vorzugsweise ist jeder der Reste R ein Methylrest. Die Polyvinylorganosiloxane haben eine Viskosität von etwa 10 bis 750 000, vorzugsweise von etwa 100 bis 150 000 mPas/25° C. Die Vinylgruppen können entweder endständig und/oder entlang der Kette angeordnet sein.

Als Polyvinylorganosiloxane aus Einheiten der durchschnittlichen Formel IV sind endständige Vinylgruppen aufweisende Diorganopolysiloxane bevorzugt, die der allgemeinen Formel

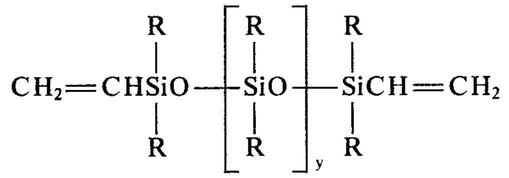

entsprechen, worin R die angegebene Bedeutung zukommt und y einen Wert hat, der einer Viskosität von 10 bis 750 000 mPas/25° C entspricht. Endständige Vinylgruppen aufweisende Diorganopolysiloxane sind bekannt und in der US-PS 3 436 366 beschrieben.

Beispiele für Polyvinylorganosiloxane aus Einheiten der durchschnittlichen Formel IV sind Vinylpentamethyldisiloxan, 1,3-Divinyltetramethyldisiloxan, 1,1,3-Trimethyl-1,3,3-trivinyldisiloxan, 1,1,3,3-Tetravinyldimethyldisiloxan sowie höhere Polymere mit bis zu 100 000 oder mehr Si-Atomen je Molekül. Von der Formel IV werden ferner auch cyclische Siloxane mit Si-gebundenen Vinylgruppen mitumfaßt, wie cyclische Trimere, Tetramere oder Pentamere von Methylvinylsiloxan $[(CH_2=CH)(CH_3)SiO]$. Als cyclisches Siloxan ist Tetramethyltetravinylcyclotetrasiloxan bevorzugt.

Die Vinylgruppen enthaltenden Verbindungen können jedoch auch Copolymere sein, die neben Siloxaneinheiten der Formel

$$(R)_c(R')_dSiO_{\frac{4-c-d}{2}} \qquad (V)$$

worin R und R' die oben angegebene Bedeutung haben, c=0, 1 oder 2, d=1 oder 2 und die Summe von c+d=1, 2 oder 3, Siloxaneinheiten der Formel III aufweisen, die bei den Polyorgano-H-siloxanen erläutert wurden. Derartige Copolymere enthalten im allgemeinen 0,1 bis 99,5 Mol-%, vorzugsweise 1,0 bis 99,5 Mol-% Einheiten V und 0,5 bis 99,9, vorzugsweise 0,5 bis 99,0 Mol-% Einheiten III.

Die Vinylgruppen enthaltenden Verbindungen können auch Gemische aus Vinylgruppen enthaltenden Polyorganosiloxanen sein.

Als Vinylgruppen enthaltende Verbindungen können ferner organische Verbindungen verwendet werden, die mindestens 2 nicht konjugierte, olefinisch ungesättigte Bindungen aufweisen. Beispiele hierfür sind Ester, wie Allylmethacrylat, Allylacrylat, Diallyladipat, Methallylacrylat, Methallylmethacrylat, Vinylacrylat und Vinylmethacrylat; Äther, wie Divinyläther von Diäthylenglykol; Kohlenwasserstoffe, wie Divinylbenzol und Vinylcyclohexen; Ester aus Polyolen und Acryl- bzw. Methacrylsäure, wie Äthylendimethacrylat, Tetramethylendiacrylat, 1,3-Butylendimethacrylat, Trimethylolpropantrimethacrylat und Pentaerithrittetramethacrylat.

Als Katalysatoren für die zu härtenden Massen können Platin und Platinverbindungen oder Platin enthaltende Komplexverbindungen verwendet werden, die die Addition von Si-gebundenen H-Atomen an vorzugsweise Si-gebundene Vinylgruppen unterstützen. Beispiele hierfür sind Hexachlorplatinsäure, Platin auf Trägern, wie Kieselsäuregel oder Kohlepulver, Platinsalze, Reaktionsprodukte aus Hexachlorplatinsäure und Alkoholen, Aldehyden oder Ketonen, Platin-Siloxan-Komplexe, Platin-Olefin-Komplexe, Platincarboxylate, Nitril-Platinhalogenid-Komplexe, Ammonium-Platin-Komplexe gemäß der US-A-3 795 656 und Platinkomplexe von ungesättigten Siloxanen, die praktisch halogenfrei sind, gemäß der US-A-3 814 730. Als Katalysatoren bevorzugt sind Platin-Keton-Komplexe gemäß der US-A-3 798 252.

Die Mengen der einzelnen Bestandteile in den zu härtenden Massen können in weitem Bereich variiert werden. Es ist nicht unbedingt erforderlich, stöchiometrisch äquivalente Mengen einzusetzen, da viele der aus den erfindungsgemäßen Massen hergestellten Produkte befriedigende Eigenschaften haben, auch wenn das Endprodukt noch unumgesetzte Vinylgruppen oder unumgesetzte Si-gebundene H-Atome enthalten kann. Im allgemeinen sollte die Vinylgruppen enthaltende Verbindung und das modifizierte Organopolysiloxangemisch aus der Polymerisationsreaktion jeweils in solchen Mengen eingesetzt werden, daß in dem Gesamtgemisch je Vinylgruppe 0,005 bis 20 Si-H-Bindungen vorhanden sind. Es ist jedoch bevorzugt, wenn in dem Gesamtgemisch jeweils die

gleiche Anzahl an Vinylgruppen und Si–H-Bindungen vorliegt, wodurch die Bildung von Endprodukten gewährleistet wird, die frei von Si–H-Bindungen und Vinylgruppen sind.

Das Platinkatalysator wird üblicherweise dem Gemisch aus der Vinylgruppen enthaltenden Verbindung und dem modifizierten Polyorganosiloxangemisch in einer den vorhandenen Vinylgruppen entsprechenden Menge zugefügt. So kann bereits mit so geringen Katalysatormengen die ein Atom Platin für jeweils eine Million vorhandener Vinylgruppen zur Verfügung stellt, eine befriedigende Härtung erzielt werden. Die eingesetzte Katalysatormenge kann jedoch auch so groß sein, daß ein Atom Platin auf jeweils eintausend Vinylgruppen vorhanden ist. Im allgemeinen ist es jedoch vorteilhaft, den Katalysator in solchen Mengen einzusetzen, daß ein Atom Platin auf jeweils eintausend bis einhunderttausend Vinylgruppen der Vinylgruppen enthaltenden Verbindung vorhanden ist.

Bei Einsatz sehr geringer Katalysatormengen ist es häufig vorteilhaft, den Katalysator in einem Lösungsmittel zu lösen oder zu dispergieren, da er sich gegenüber den Reaktionsteilnehmern unter den gewählten Reaktionsbedingungen inert verhält, um die einheitliche Dispergierung oder Lösung des Platinkatalysators in dem Gesamtgemisch zu erleichtern. Beispiele für derartige Lösungsmittel sind Kohlenwasserstoffe, wie Benzol, Toluol, Xylol, Erdölfraktionen mit einem Siedepunkt von 153 bis 204°C, halogenierte Alkane sowie Sauerstoff enthaltende Lösungsmittel, wie Dioxan, Äthanol und Butanol. Die Menge des verwendeten Lösungsmittels spielt keine entscheidende Rolle. Mit Lösungen, die 0,1 bis 0,0001 Gew.-Teile des Platinkatalysators je Gew.-Teil Lösungsmittel enthalten, werden befriedigende Ergebnisse erzielt.

Die Massen, die die Vinylgruppen enthaltende Verbindung, das modifizierte Organopolysiloxangemisch und den Platinkatalysator enthalten, können bei Temperaturen im Bereich von Raumtemperatur bis zu etwa 100 bis 150°C gehärtet werden. Die für die Härtung erforderliche Zeit kann ebenfalls in weiten Grenzen variiert werden, in Abhängigkeit von den jeweils verwendeten Reaktionsteilnehmern, den Mengen der Reaktionsteilnehmer und der Temperatur. Die Härtung kann daher in Zeiträumen, die von wenigen Minuten bis zu 24 Stunden oder mehr reichen, bewerkstelligt werden. Unter jeweils gleichen Bedingungen hinsichtlich Art und Mengen der Reaktionsteilnehmer nimmt die Härtungsgeschwindigkeit mit steigender Temperatur und mit steigender Katalysatorkonzentration in der Masse zu.

Wenn die härtbaren Massen vor der Härtung längere Zeit gelagert werden sollen, ist es vorteilhaft, diese getrennt zu verpacken. Bei derartigen Zweikomponentensystemen werden zweckmäßig das modifizierte Organopolysiloxangemisch und der Katalysator in einer Packung und die Vinylgruppen enthaltende Verbindung und gegebenenfalls mitzuverwendende Füllstoffe oder Zusätze in der zweiten Packung untergebracht. Kurz vor Gebrauch, das heißt bei der Anwendung, werden die beiden Komponenten dann vermischt und gehärtet.

Die erfindungsgemäßen Massen enthalten bereits ausreichende Verstärkungsmittel durch die Anwesenheit der in situ gebildeten Teilchen in dem modifizierten Organopolysiloxangemisch. Zusätzlich können jedoch Füllstoffe oder andere übliche Zusätze in die Massen eingearbeitet werden. Beispiele für Füllstoffe sind verstärkende Füllstoffe, wie pyrogen gewonnene Siliciumdioxidarten, gefällte Kieselsäuren mit großer Oberfläche, Silicaaerogele und nichtverstärkende Füllstoffe, wie Diatomeenerde und Quarzmehl, ferner Metalloxide, wie Titandioxid, Ferrioxid, Zinkoxid und faserartige Füllstoffe, wie Asbest und Glasfasern. Beispiele für Zusätze sind Pigmente, Antioxidantien und UV-Absorber.

## Herstellung der modifizierten Polyorganosiloxan-Gemische

### Beispiel 1

Ein 500-ml-Glasgefäß, das mit Rührer, Gaseinleitungsrohr und Rückflußkühler ausgerüstet war, wurde mit einer Ausgangsmischung aus 78 Gew.-Tl. Styrol, 63 Gew.-Tl. Butylacrylat, 94 Gew.-Tl. eines endständige H-Atome aufweisenden Dimethylpolysiloxans mit einer Viskosität von 50 mPas/25°C und einem Si–H-Gehalt von 0,7 Gew.-%, 1,5 Gew.-Tl. 1,1-Di-tert.-butylperoxy-3,3,5-Trimethylcyclohexan und 12 Tl. Wasser beschickt. Die Mischung wurde unter Rühren und Durchleiten von Stickstoff etwa 4,3 Stunden auf etwa 97°C erhitzt, dann innerhalb von 1 Stunde bei 100°C und innerhalb 1 Stunde bei 120°C von flüchtigen Bestandteilen befreit. Die Viskosität des erhaltenen modifizierten Polyorganosiloxangemisches wurde mit einem Rotationsviskometer nach Brookfield bei 25°C mit einer Spindel No. 7 bei 10 Umdrehungen/Minute bestimmt. Die Viskosität betrug nach 1 Minute 92 000 mPas, nach 5 Minuten 68 000 mPas und nach 10 Minuten 60 000 mPas.

Das erhaltene modifizierte Polyorganosiloxangemisch (1) war ein weißes, lichtundurchlässiges, viskoses Material, in dem bei Betrachtung under dem Mikroskop bei 430facher Vergrößerung längliche Teilchen zu sehen waren.

Unter jeweils gleichen Bedingungen, wie in Beispiel 1 beschrieben, wurden unter Einsatz von Ausgangsmischungen aus den angegebenen Bestandteilen die modifizierten Polyorganosiloxangemische 2–11 hergestellt.

## Beispiel 2

Ausgangsmischung:

| | |
|---|---|
| 141 Gew.-Tl. | Styrol |
| 94 Gew.-Tl. | eines endständige H-Atome aufweisenden Dimethylpolysiloxans mit einer Viskosität von 50 mPas/25° C und einem SiH-Gehalt von 0,7 Gew.-% und |
| 1,5 Gew.-Tl. | 1,1-Di-tert.-Butylperoxy-3,3,5-trimethylcyclohexan. |

Es wurde das modifizierte Polyorganosiloxangemisch (2) erhalten.

## Beispiel 3

Ausgangsmischung (unter Verwendung eines 800-ml-Glasgefäßes):

| | |
|---|---|
| 41 Gew.-Tl. | Styrol |
| 204 Gew.-Tl. | Butylacrylat |
| 164 Gew.-Tl. | eines endständige H-Atome aufweisenden Dimethylpolysiloxans mit einer Viskosität von 50 mPas/25° C und einem SiH-Gehalt von 0,7 Gew.-% |
| 1,5 Gew.-Tl. | 1,1-Di-tert.-Butylperoxy-3,3,5-trimethylcyclohexan und |
| 20 Tl. | Wasser. |

Es wurde das modifizierte Polyorganosiloxangemisch (3) erhalten.

## Beispiel 4

Ausgangsmischung:

| | |
|---|---|
| 154 Gew.-Tl. | Butylacrylat |
| 42 Gew.-Tl. | Acrylnitril |
| 131 Gew.-Tl. | eines endständige H-Atome aufweisenden Dimethylpolysiloxans mit einer Viskosität von 50 mPas/25° C und einem SiH-Gehalt von 0,7 Gew.-% |
| 1,5 Gew.-Tl. | 1,1-Di-tert.-Butylperoxy-3,3,5-trimethylcyclohexan und |
| 15 Tl. | Wasser. |

Es wurde das modifizierte Polyorganosiloxangemisch (4) erhalten.

## Beispiel 5

Ausgangsmischung:

| | |
|---|---|
| 90 Gew.-Tl. | Vinylchlorid |
| 210 Gew.-Tl. | eines mit Trimethylsiloxygruppen endblockierten Copolymeren mit einer Viskosität von 400 mPas/25° C, das 2 Mol-% Methyl-H-siloxaneinheiten enthielt, während die restlichen Einheiten Dimethylsiloxaneinheiten waren, und |
| 1,5 Gew.-Tl. | eines 1,1-Di-tert.-Butylperoxy-3,3,5-trimethylcyclohexan. |

Es wurde das modifizierte Polyorganosiloxangemisch (5) erhalten.

## Beispiel 6

Ausgangsmischung:

| | |
|---|---|
| 155 Gew.-Tl. | Vinylacetat |
| 145 Gew.-Tl. | eines Copolymeren mit einer Viskosität von 1000 mPas/25° C, das aus Dimethyl-H-siloxan-, Dimethylsiloxan-, Methyl-H-siloxan- und Trimethylsiloxaneinheiten in einem Molverhältnis von 1,9 : 4,9 : 3,1 : 0,1 |
| 1 Gew.-Tl. | tert.-Butylperoctoat und |
| 12 Tl. | Wasser. |

Das erhaltene modifizierte Polyorganosiloxangemisch (6) war eine weiße, lichtundurchlässige viskose Flüssigkeit.

## Beispiel 7

Ausgangsmischung:

| | |
|---|---|
| 150 Gew.-Tl. | Vinylidenchlorid |
| 150 Gew.-Tl. | des endständige H-Atome aufweisenden Dimethylpolysiloxans mit einer Viskosität von 50 mPas/25° C und einem Si—H-Gehalt von 0,7 Gew.-% |
| 1,1 Gew.-Tl. | Di-tert.-butylperoxid und |
| 12 Tl. | Wasser. |

Das erhaltene modifizierte Polyorganosiloxangemisch war eine weiße, lichtundurchlässige viskose Flüssigkeit.

## Beispiel 8

Ausgangsmischung:

| | |
|---|---|
| 100 Gew.-Tl. | Styrol |
| 82 Gew.-Tl. | Butylacrylat |
| 10 Gew.-Tl. | Allylmethacrylat |
| 121 Gew.-Tl. | des endständige H-Atome aufweisenden Dimethylpolysiloxans mit einer Viskosität von 50 mPas/25° C und einem Si—H-Gehalt von 0,7 Gew.-% |
| 1,1 Gew.-Tl. | Di-tert.-butylperoxid und |
| 12 Tl. | Wasser. |

Das erhaltene modifizierte Polyorganosiloxangemisch war weiß, lichtundurchlässig und hochviskos.

## Beispiel 9

Ausgangsmischung:

| | |
|---|---|
| 78 Gew.-Tl. | Styrol |
| 63 Gew.-Tl. | Butylacrylat |
| 64 Gew.-Tl. | eines endständige H-Atome aufweisenden Dimethylpolysiloxans mit einer Viskosität von 350 mPas/25° C |
| 1,5 Gew.-Tl. | 1,1-Di-tert.-butylperoxy-3,3,5-trimethylcyclohexan und |
| 12 Tl. | Wasser. |

Das erhaltene modifizierte Polyorganosiloxangemisch (9) war weiß und hochviskos.

## Beispiel 10

Ausgangsmischung:

| | |
|---|---|
| 78 Gew.-Tl. | Styrol |
| 63 Gew.-Tl. | Butylacrylat |
| 150 Gew.-Tl. | eines endständige H-Atome aufweisenden Dimethylpolysiloxans mit einer Viskosität von 400 mPas/25° C |
| 1,5 Gew.-Tl. | 1,1-Di-tert.-butylperoxy-3,3,5-trimethylcyclohexan und |
| 12 Tl. | Wasser. |

Es wurde das modifizierte Polyorganosiloxangemisch (10) erhalten.

## Beispiel 11

Ausgangsmischung:

| | |
|---|---|
| 78 Gew.-Tl. | Styrol |
| 63 Gew.-Tl. | Butylacrylat |
| 100 Gew.-Tl. | eines Copolymeren mit einer Viskosität von 3000 mPas/25° C aus Dimethylsiloxan-, Methyl-H-siloxan- und Trimethylsiloxaneinheiten mit einem Verhältnis von |

Dimethylsiloxaneinheiten : Methyl-H-siloxaneinheiten von 12 : 1
1,5 Gew.-Tl. 1,1-Di-tert.-butylperoxy-3,3,5-trimethylcyclohexan und
12 Tl. Wasser.

Es wurde das modifizierte Polyorganosiloxangemisch (11) erhalten.

## Herstellung und Härtung der Massen

### Beispiel 12

20 Gew.-Tl. des modifizierten Polyorganosiloxangemisches (1) wurden mit
0,5 Gew.-Tl. einer 0,1gew.-%igen Lösung von Hexachlorplatinsäure in Isopropanol und
0,5 Gew.-Tl. 1,3,5,7-Tetramethyl-1,3,5,7-Tetravinylcyclotetrasiloxan

zu einer Masse verarbeitet. Die Masse härtete beim Stehenlassen über Nacht zu einem elastomeren Feststoff.

### Beispiel 13

20 Gew.-Tl. des modifizierten Polyorganosiloxangemisches (1) wurden mit
0,5 Gew.-Tl. einer 0,1gew.-%igen Lösung von Hexachlorplatinsäure in Isopropanol und
0,5 Gew.-Tl. 1,3,5,7-Tetramethyl-1,3,5,7-Tetravinylcyclotetrasiloxan

vermischt und auf 120°C erhitzt, wobei die Masse in weniger als 1 Stunde zu einem elastomeren Feststoff härtete.

### Beispiel 14

10 Gew.-Tl. des modifizierten Polyorganosiloxangemisches (1)
0,75 Gew.-Tl. 1,3,5,7-Tetramethyl-1,3,5,7-Tetravinylcyclotetrasiloxan und
0,25 Gew.-Tl. eines Aminogruppen aufweisenden Platinkatalysators
wurden vermischt und auf 115°C erhitzt, wobei die Masse innerhalb von 8 Minuten zu einem elastomeren Feststoff härtete.

Der Aminogruppen aufweisende Platinkatalysator wurde gemäß Beispiel 1 der US-A-3 795 656 aus 15,4 Gew.-Tl. eines Aminogruppen aufweisenden Organopolysiloxans und 1,5 Gew.-Tl. Hexachloroplatinsäurehexahydrat hergestellt.

### Beispiel 15

Aus den gleichen Bestandteilen wie in Beispiel 14 mit der Abänderung, daß anstelle des modifizierten Polyorganosiloxangemisches (1) 10 Gew.-Tl. des modifizierten Polyorganosiloxangemisches (3) verwendet wurden, wurde eine Masse hergestellt, die beim Erhitzen auf 115°C zu einem elastomeren Feststoff härtete.

### Beispiel 16

Aus den gleichen Bestandteilen wie in Beispiel 14 mit der Abänderung, daß anstelle des modifizierten Polyorganosiloxangemisches (1) 10 Gew.-Tl. des modifizierten Polyorganosiloxangemisches (4) verwendet wurden, wurde eine Masse hergestellt, die beim Erhitzen auf 115°C in etwa 10 Minuten zu einem Elastomeren härtete.

### Beispiel 17

10 Gew.-Tl. des modifizierten Polyorganosiloxangemisches (8) wurden mit 0,5 Gew.-Tl. eines Copolymeren mit einer Viskosität von 2000 mPas/25°C aus 95 Mol-% Dimethylsiloxan- und 5 Mol-% Methylvinylsiloxaneinheiten und 0,25 Gew.-Tl. des Aminogruppen aufweisenden Platinkatalysators aus Beispiel 14 vermischt und auf 115°C erhitzt, wobei die Masse zu einem elastomeren Feststoff härtete.

**Patentansprüche**

1. Härtbare Massen auf Grundlage von Si – H-Bindungen aufweisenden Polyorganosiloxanen, einer Verbindung mit mindestens zwei Vinylgruppen je Molekül als Vernetzer und einem Katalysator, der die Addition von Si-gebundenen Wasserstoffatomen an die Vinylgruppen unterstützt, dadurch gekennzeichnet, daß sie als Si – H-Bindungen aufweisende Polyorganosiloxane modifizierte Polyorganosiloxangemische mit in situ gebildeten Teilchen aus

(1) 20 bis 95 Gew.-% flüssigen Polyorgano-H-siloxanen und
(2) 80 bis 5 Gew.-%, jeweils bezogen auf das Gesamtgewicht von (1) und (2), organischen Polymeren mit sich wiederholenden, von aliphatisch ungesättigte Bindungen aufweisenden Monomeren ableitenden Einheiten,

die durch Polymerisation von aliphatisch ungesättigte Bindungen aufweisenden Monomeren in Gegenwart von flüssigen Polyorgano-H-siloxanen mit einer Viskosität von 10 bis 1 000 000 mPas/25° C, mittels freier Radikale hergestellt worden sind, enthalten.

2. Härtbare Massen gemäß Anspruch 1, dadurch gekennzeichnet, daß die modifizierten Polyorganosiloxangemische als Polyorgano-H-siloxane (1) solche mit endständigen SiH-Gruppen enthalten.

3. Härtbare Massen gemäß Anspruch 1, dadurch gekennzeichnet, daß die modifizierten Polyorganosiloxangemische als organische Polymere (2) mit sich wiederholenden Einheiten solche enthalten, die sich von mindestens zwei Monomeren mit aliphatisch ungesättigten Bindungen ableiten.

4. Härtbare Massen gemäß Anspruch 3, dadurch gekennzeichnet, daß die modifizierten Polyorganosiloxangemische mit sich wiederholenden Einheiten in den Polymeren (2), sich von Monomeren ableiten, von denen mindestens eines nicht konjugierte aliphatisch ungesättigte Bindungen aufweist.

5. Härtbare Massen gemäß Anspruch 1, dadurch gekennzeichnet, daß sie als Vernetzer Polyvinylorganosiloxane und als Katalysator Platin oder eine Platinverbindung enthalten.

6. Verfahren zur Herstellung der modifizierten Polyorganosiloxangemische in den diese enthaltenden Massen gemäß Anspruch 1 durch Polymerisation von aliphatisch ungesättigten Monomeren in Gegenwart von Polyorganosiloxanen mittels freier Radikale, dadurch gekennzeichnet, daß die Polymerisation in Gegenwart von flüssigen Polyorgano-H-siloxsiloxanen bei Temperaturen von 50° bis 160° C in einem flüssigen Medium, das sich gegenüber den Reaktionsteilnehmern und den Polymerisationsprodukten bei den jeweils angewendeten Temperaturen inert verhält und unter Anwendung eines organischen Peroxids durchgeführt wird.

7. Verfahren gemäß Anspruch 6, dadurch gekennzeichnet, daß als flüssige Polyorgano-H-siloxane solche verwendet werden, die aus Einheiten der durchschnittlichen Formel

$$(R)_aSi(H)_bSiO_{\frac{4-a-b}{2}}$$

aufgebaut sind, worin R von aliphatisch ungesättigten Bindungen freie, einwertige, gegebenenfalls halogenierte Kohlenwasserstoffreste oder Cyanoalkylreste bedeutet, a einen Wert von 0 bis 2,5, b einen Wert von 0,0005 bis 2,0 hat und die Summe von a + b 1,0 bis 3 ist.

8. Verfahren gemäß Anspruch 6, dadurch gekennzeichnet, daß als flüssige Polyorgano-H-siloxane Copolymere verwendet werden, die mindestens eine Einheit der Formel

$$(R)_c(H)_dSiO_{\frac{4-c-d}{2}}$$

neben Siloxaneinheiten der Formel

$$(R)_nSiO_{\frac{4-n}{2}}$$

aufweisen, worin R von aliphatisch ungesättigten Bindungen freie, einwertige, gegebenenfalls halogenierte Kohlenwasserstoffreste oder Cyanoalkylreste bedeutet, c = 0, 1 oder 2, d = 1 oder 2, c + d = 1,2 oder 3 und n = 0, 1, 2 oder 3.

9. Verfahren gemäß Anspruch 6 und 7, dadurch gekennzeichnet, daß endständige SiH-Gruppen aufweisende Diorganopolysiloxane der allgemeinen Formel

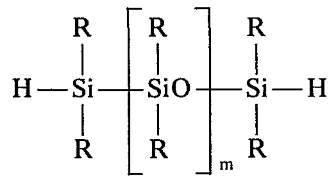

verwendet werden, worin R die angegebene Bedeutung zukommt und m einen Wert hat, der einer Viskosität von 10 bis 1 000 000 mPas/25° C entspricht.

**Claims**

1. Curable compositions on the basis of organopolysiloxanes containing Si – H bonds, a compound having at least two vinyl groups per molecule as a crosslinking agent, and a catalyst promoting the addition of Si-bonded hydrogen atoms to said vinyl groups, characterized in that said compositions contain as organopolysiloxanes with Si – H bonds modified organopolysiloxane mixtures containing in situ generated particles comprising

(1) from 20 to 95% by weight of fluid organopolyhydrogensiloxanes, and
(2) from 80 to 5% by weight, each based on the total weight of (1) and (2), of organic polymers being constituted of recurring units derived from monomers containing aliphatically unsaturated bonds,

said modified organopolysiloxane mixtures having been obtained from the polymerization of monomers containing aliphatically unsaturated bonds in the presence of fluid organopolyhydrogensiloxanes having a viscosity of from 10 to 1,000,000 mPas at 25° C, by means of free radicals.

2. Curable compositions according to claim 1, characterized in that said modified organopolysiloxane mixtures contain organopolyhydrogensiloxanes (1) with terminal SiH groups.

3. Curable compositions according to claim 1, characterized in that said modified organopolysiloxane mixtures contain organic polymers (2) with recurring units which are derived from at least two monomers with aliphatically unsaturated bonds.

4. Curable compositions according to claim 3, characterized in that said modified organopolysiloxane mixtures with recurring units in the polymers (2) are derived from monomers of which at least one contains non-conjugated, aliphatically unsaturated bonds.

5. Curable compositions according to claim 1, characterized in that said compositions contain as a crosslinking agent vinylorganopolysiloxanes, and as a catalyst platinum or a platinum compound.

6. Process for the manufacture of the modified organopolysiloxane mixtures in the compositions according to claim 1 containing said mixtures, by the polymerization of aliphatically unsaturated monomers in the presence of organopolysiloxanes, by menas of free radicals, characterized in that said polymerization is conducted in the presence of fluid organopolyhydrogensiloxanes at temperatures of from 50° to 160° C in a liqued medium which is inert as against the reactants and the polymerization products at the temperatures applied, and in the presence of an organic peroxide.

7. Process according to claim 6, characterized in that fluid organopolyhydrogensiloxanes are used which are built up of units of the average formula

$$(R)_aSi(H)_bSiO_{\frac{4-a-b}{2}}$$

wherein R represents monovalent, optionally halogenated hydrocarbon radicals being free of aliphatically unsaturated bonds, or cyanoalkyl radicals, a has a value of from 0 to 2.5, b has a value of from 0.0005 to 2.0, and the sum of a + b is equal to 1.0 to 3.

8. Process according to claim 6, characterized in that as fluid organopolyhydrogensiloxanes copolymers are used which contain at least one unit of the formula

$$(R)_c(H)_dSiO_{\frac{4-c-d}{2}}$$

besides siloxane units of the formula

$$(R)_nSiO_{\frac{4-n}{2}}$$

wherein R represents monovalent, optionally halogenated hydrocarbon radicals being free of aliphatically unsaturated bonds, or cyanoalkyl radicals, c is equal to 0, 1 or 2, d is equal to 1 or 2, c + d is equal to 1, 2 or 3, and n is equal to 0, 1, 2 or 3.

9. Process according to claims 6 and 7, characterized in that diorganopolysiloxanes containing terminal SiH groups are used which correspond to the general formula

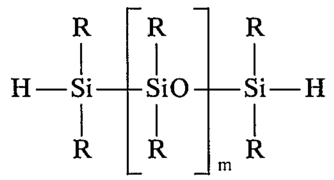

wherein R has the already indicated meaning, and m has a value corresponding to a viscostiy of from 10 to 1,000,000 mPas at 25° C.

**Revendications**

1. Compositions durcissables à base de polyorganosiloxanes présentant des liaisons Si – H, d'un composé comportant par molécule au moins deux groupes vinyles comme agent de réticulation et d'un catalyseur favorisant l'addition des atomes d'hydrogène liés à du Si sur des groupes vinyles, compositions caractérisées en ce qu'elles contiennent comme polyorganosiloxanes présentant des liaisons Si – H des mélanges de polyorganosiloxanes modifiés comportant des particules formées sur place à partir de:

(1) 20 à 95% en poids de polyorgano-H-siloxanes liquides et
(2) 80 à 5% en poids, chaque fois par rapport au poids total de (1) et (2), de polymères organiques comportant des motifs répétés dérivant de monomères présentant des insaturations aliphatiques,

que l'on produit par polymérisation de monomères présentant des insaturations aliphatiques, en présence de polyorgano-H-siloxanes liquides présentant une viscosité de 10 à 1 000 000 de mPas à 25° C, en opérant à l'aide de radicaux libres.

2. Compositions durcissables selon la revendication 1, caractérisées en ce que les mélanges de polyorganosiloxanes modifiés contiennent comme polyorgano-H-siloxanes (1) ceux présentant des groupes Si – H terminaux.

3. Compositions durcissables selon la revendication 1, caractérisées en ce que les mélanges de polyorganosiloxanes modifiés contiennent, comme polymères organiques (2) comportant des motifs répétés, ceux qui dérivent d'au moins deux monomères présentant des insaturations aliphatiques.

4. Compositions durcissables selon la revendication 3, caractérisées en ce que les mélanges de polyorganosiloxanes modifiés, comportant des motifs répétés dans les polymères (2), dérivent de monomères dont l'un au moins présente des insaturations aliphatiques non conjuguées.

5. Compositions durcissables selon la revendication 1, caractérisées en ce qu'elles contiennent comme agent de réticulation des polyvinylorganosiloxanes et, comme catalyseur, du platine ou un composé du platine.

6. Procédé pour produire des mélanges de polyorganosiloxanes modifiés dans les compositions qui les contiennent, selon la revendication 1, par polymérisation, à l'aide de radicaux libres, de monomères à insaturation aliphatique en présence de polyorganosiloxanes, procédé caractérisé en ce qu'on effectue la polymérisation en présence de polyorgano-H-siloxanes liquides à températures de 50° à 160° C dans un milieu liquide qui est inerte à l'égard des corps participant à la réaction et aux produits de la polymérisation aux températures appliquées dans chaque cas, et en ce qu'on opère en utilisant un peroxyde organique.

7. Procédé selon la revendication 6, caractérisé en ce qu'on utilise comme polyorgano-H-siloxanes liquides ceux formés de motifs répondant à la formule moyenne:

$$(R)_aSi(H)_bSiO_{\frac{4-a-b}{2}}$$

dans laquelle les R sont des radicaux monovalents d'hydrocarbures éventuellement halogénés ou des radicaux cianoalkyles, sans insaturation aliphatique; a vaut de 0 à 2,5; b vaut de 0,0005 à 2,0 et la somme (a + b) vaut 1,0 à 3.

8. Procédé selon la revendication 6, caractérisé en ce qu'on utilise comme polyorgano-H-siloxanes liquides des copolymères qui présentent au moins un motif de formule:

$$(R)_c(H)_dSiO_{\frac{4-c-d}{2}}$$

en plus de motifs siloxanes de formule:

$$(R)_nSiO_{\frac{4-n}{2}}$$

où R représente des radicaux monovalents d'hydrocarbures éventuellement halogénés ou des radicaux cyanoalkyles, sans insaturation aliphatique; c vaut 0,1 ou 2, d vaut 1 ou 2, (c+d) vaut 1, 2 ou 3; et n vaut 0, 1, 2 ou 3.

9. Procédé selon la revendication 6 ou 7, caractérisé en ce qu'on utilise des polydiorganosiloxanes présentant des groupes Si terminaux et répondant à la formule générale:

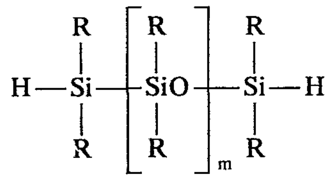

dans laquelle R a le sens indiqué et m a une valeur correspondant à une viscosité de 10 à 1 000 000 de mPas à 25° C.